# EUROPEAN PATENT APPLICATION

(11) **EP 1 650 896 A1**
(43) Date of publication of application: **26.04.2006**
(21) Application number: 05109155.1
(22) Date of filing: 03.10.2005
(51) Int. Cl.: H04L 12/18, H04L 12/26

(54) **Processing apparatus and method of analysing datagrams**

(30) Priority: 19.10.2004 GB 0423130
(71) Applicant: Agilent Technologies, Inc. - a Delaware corporation -, Palo Alto, CA 94303-0870 (US)
(72) Inventor: Mitchell, Kevin, EH30 9TG, South Queensferry (GB)
(74) Representative: Coker, David Graeme

(57) **Abstract**

In relation to routers used in a communications network, it is known to employ either means external to a given router or integrated with the router to monitor flows of traffic. However, such measures are either incorrectly placed to monitor a network problem, or require a, desirably avoidable, level of processing overhead within line cards of routers. The present invention overcomes these problems by making use of a multicast facility of a router (100) to mark received packets (201), in accordance with a predetermined sampling rate, for forwarding to a central processing resource (102) that is arranged to perform measurements in relation to sampled packets.

## Description

The present invention relates to a processing apparatus of the type, for example, that processes packets received by a packet forwarding apparatus, such as a router. The present invention also relates to a method of processing datagrams and a use of a multicast facility.

In the field of communications networks, operators of communications networks need to collect data concerning a network in order to manage the network. In this respect, data collected is used to monitor current operation and "health" of the network, as well as accurately identify possible traffic bottlenecks in the network and trends for future growth of the network. The data collected originates from many sources throughout the network.

It is known to extract low-level statistics, such as packet and byte counts, in respect of packets flowing across an interface of a router using the Simple Network Management Protocol. Also, systems such as NetFlow produced by Cisco Systems, Inc. support higher-level flow-based monitoring of network traffic. However, such integrated systems can place a significant burden on network devices, such as routers, used to provide monitoring statistics. Consequently, to avoid network device performance problems, some network operators deploy probes. One such known network probe is the Remote MONitoring (RMON) probe, as described in "SNMP, SNMPv2, SNMPv3, and RMON 1 and 2" (William Stallings, Addison Wesley). The RMON probe is used where a detailed view of network traffic is required, particularly when trouble-shooting. However, such probes are expensive and so are deployed in a selective small number of places. Consequently, when faults occur, they do not always occur in locations where a probe is present.

Arguments therefore exist for maintaining monitoring functionality in network devices, such as routers, particularly in line-cards of the routers. However, hitherto, support for additional monitoring of such devices to carry out detailed measurements on a packet stream results in significant impact on the packet forwarding rate of the line card of the router. Furthermore, to add a higher-level analysis capability of the type performed by the NetFlow system or the RMON probe requires a non-trivial processing component to analyse each received packet and generate appropriate statistics; adding hardware to perform such analysis, be it in the form of network processors or Field Programmable Gate Arrays (FPGAs), is however costly. Further, if a given router uses a large number of line cards, this problem is exacerbated.

According to a first aspect of the present invention, there is provided a processing apparatus for processing a separately retrievable multicast field associated with a packet received by a packet forwarding apparatus, the processing apparatus comprising: a packet selector for making a predetermined modification to the separately retrievable multicast field in response to the received packet corresponding to a packet flow to be monitored, thereby marking the received packet for forwarding to a central processing resource.

The packet selector may be arranged to select received packets at a predetermined sampling rate, and the received packet may be a sampled received packet.

The predetermined modification of the separately retrievable multicast field may be a modification of a predetermined bit in the separately retrievable multicast field so as to identify the received packet associated with the separately retrievable multicast field for forwarding to the central processing resource, the flow to be monitored comprising the received packet.

According to a second aspect of the present invention, there is provided a packet forwarding apparatus comprising the processing apparatus as set forth above in relation to the first aspect of the present invention.

The apparatus may further comprise the central processing resource and a switching fabric coupled to each of the central processing resource and a packet forwarder; wherein the packet forwarder may be arranged to forward a copy of the received packet to the central processing resource in response to detection of the predetermined modification to the separately retrievable multicast field.

The apparatus may further comprise a packet classifier for identifying another packet forwarding apparatus to receive the received packet, the packet classifier possibly including the processing apparatus, and the packet forwarder may be arranged, when in use, to send the received packet to the another packet forwarding apparatus.

The central processing resource may be arranged to perform statistical analysis in relation to non-control packets received from the packet forwarder.

According to a third aspect of the present invention, there is provided a method of analysing packets for a packet forwarding apparatus, the method comprising the steps of: receiving a packet to be forwarded; making a predetermined modification to a separately retrievable multicast field associated with the received packet in response to the received packet corresponding to a packet flow to be monitored, thereby marking the received packet for forwarding to a central processing resource.

The method may further comprise the steps of: detecting the predetermined modification to the separately retrievable multicast field; and forwarding a copy of the received packet in response to the detection of the predetermined modification for receipt by the central processing resource.

The method may further comprise the step of: receiving a plurality of packets comprising the received packet; and selectively modifying respective separately retrievable multicast fields associated with the plurality of packets in accordance with a predetermined rate so as to sample packets.

According to a fourth aspect of the present invention, there is provided a computer program code element comprising computer program code means to make a computer execute the method as set forth above in relation to the third aspect of the present invention.

The computer program element may be embodied on a computer readable medium.

According to a fifth aspect of the present invention, there is provided a use of a separately retrievable multicast field associated with a non-control packet received by a packet forwarding apparatus to forward the received packet to a central processing resource of the packet forwarding apparatus for monitoring a traffic flow associated with the received packet.

It is thus possible to provide an embedded monitoring apparatus and method therefor that facilitates improved packet monitoring, whilst minimising processing overhead. Consequently, apparatus costs are not increased significantly and indeed the need to deploy external probes can be minimised. By transferring measurement processing to a centralised processor within a network device, forwarding speeds of packets are not adversely affected and the cost of line cards can be reduced.

At least one embodiment of the invention will now be described, by way of example only, with reference to the accompanying drawings, in which:
**Figure 1** is a schematic diagram of a router architecture for use with an apparatus constituting an embodiment of the invention;
**Figure 2** is a schematic diagram of a line card of the router architecture of Figure 1 using a packet processing mechanism employed by the apparatus constituting the embodiment of the invention;
**Figure 3** is a schematic diagram of the packet processing mechanism of Figures 2 and 3, but in even greater detail;
**Figure 4** is a more detailed schematic diagram of the packet processing mechanism of Figure 2;
**Figure 5** is a flow diagram of a method for use with the apparatus of Figure 4;
**Figure 6** is a flow diagram of another method for use with the apparatus of Figure 5; and
**Figure 7** is a flow diagram of a method for use with a management processor of Figure 1.

Throughout the following description identical reference numerals will be used to identify like parts.

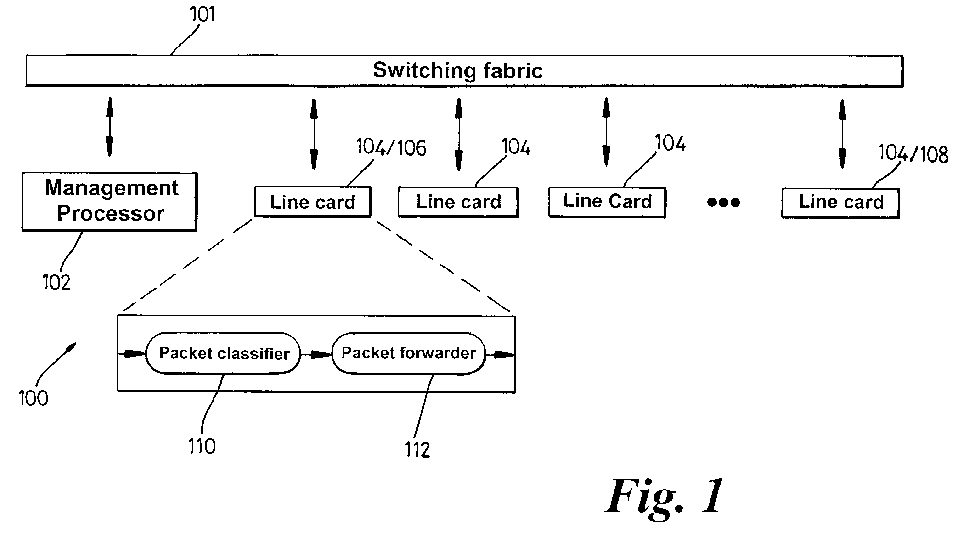

Referring to Figure 1, a packet forwarding apparatus, for example, a router 100 comprises a switching fabric 101 coupled to a central processing resource, for example, a management processor 102 and a plurality of line-cards 104, for example, an i^{th} line card 106, a k^{th} line card 108. Each of the plurality of line cards supports at least one respective interface to a communications network.

Each of the plurality of line cards 104, for example the i^{th} line card 106 comprises a packet classifier Integrated Circuit (IC) 110 (hereinafter referred to as a "classifier chip") coupled to a packet forwarder IC 112 (hereinafter referred to as a "forwarder chip"). The classifier chip 110 identifies one or more interface to which to send a received packet for onward transmission to one or more respective routers as part of one or more legs of a journey of the received packet from a source IP address to one or more destination IP addresses. Hence, the classifier chip 110 supports multicasting and other known functionality, for example, mapping incoming packets into appropriate packet flows, prioritising packets, and admission control context.

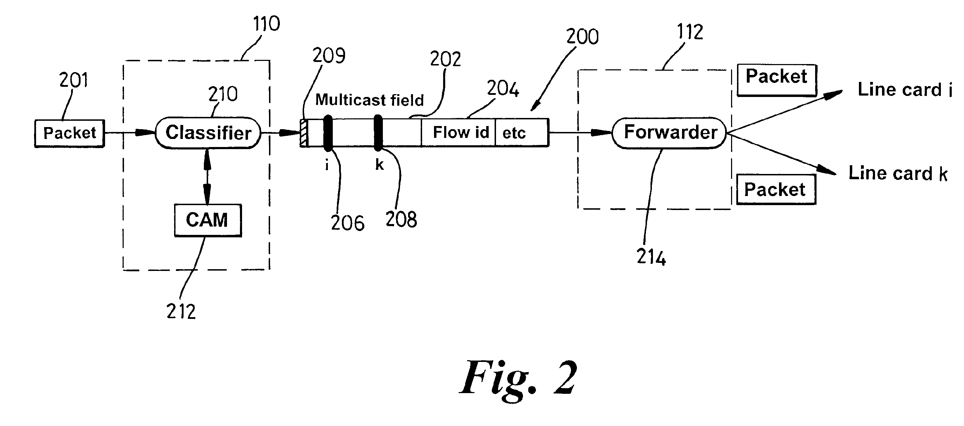

Turning to Figure 2, the classifier chip 110 is capable of providing data 200 relating to the processing of a received packet 201 to the forwarder chip 112. The data 200 comprises an identity of the received packet, a multicast field 202, a flow ID 204, and other fields suitable for guiding the routing process in relation to the received packet 201 and other received packets.

The multicast field 202 has a number of bit positions corresponding to the interfaces for the received packet 201 mentioned above. For example, the multicast field 202 has an i^{th} bit position 206 corresponding to an i^{th} interface supported by the i^{th} line card 106 and a k^{th} bit position 208 corresponding to a k^{th} interface supported by the k^{th} line card 108. In addition, the multicast field 202 also comprises a management processor bit position 209 for packets to be forwarded to the management processor 102.

The classifier chip 110 comprises a classifier unit 210. The classifier unit 210 is, in this example, a programmed unit of a programmable processing device, such as a Application Specific Integrated Circuit (ASIC). The classifier unit 210 is coupled to a Content Addressable Memory (CAM) 212, the CAM 212 storing the data 200 against a key (not shown in Figure 2) therein. The classifier unit 210 is also coupled, via a first data bus (not shown) to a forwarder unit 214 supported by the forwarder chip 112.

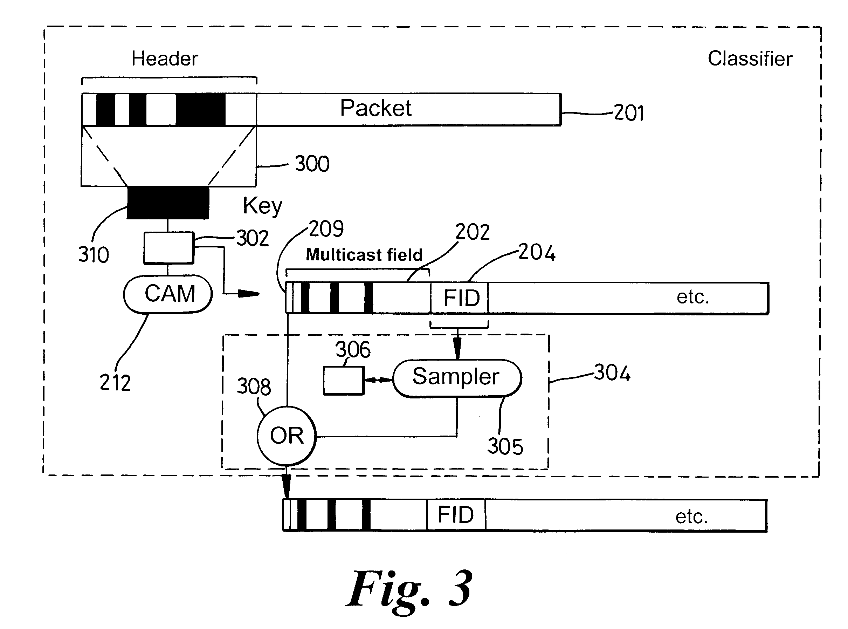

Referring to Figure 3, the classifier unit 210 also comprises a key generation unit 300 coupled to a look-up unit 302, the look-up unit 302 being coupled to a packet sampling unit 304 by a second data bus (not shown). The packet sampling unit 304 comprises a sampler 305 capable of accessing a local store 306 for storing a list of Flow IDs of flows to be monitored, associated sampling rates and packet counts, the sampler 305 being coupled to a bit modification unit 308, in this example an OR logic gate. The packet sampling unit 304 is also coupled to an output of the classifier unit 210 for communicating the data to the forwarder unit 214.

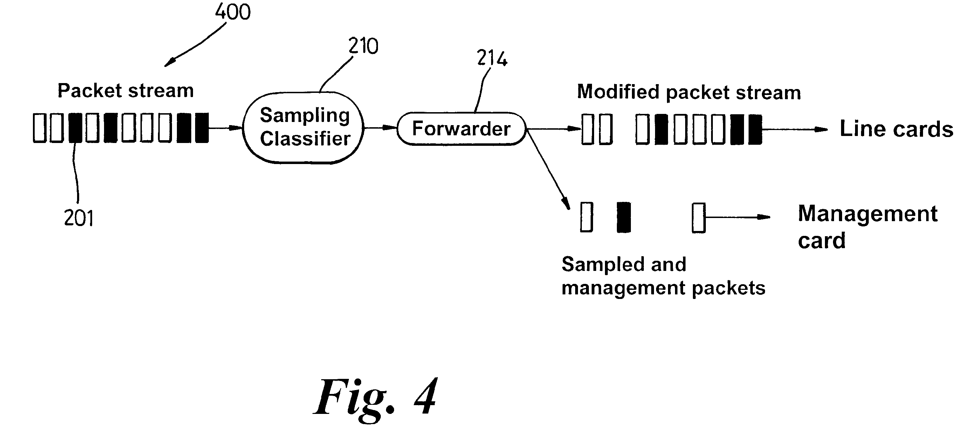

In operation (Figure 4), and in overview, the classifier unit 210 receives a stream of packets 400 including the received packet 201 and modifies the respective multicast field 202 of the data 200 corresponding to each packet received. The multicast fields are modified in accordance with a policy relating to the processing by the router 100 of packets forming the stream of packets 400. In this respect, if the received packet 201 is simply to be forwarded to one recipient line card 104, only one bit of the multicast field 202 is set for the received packet 201, which in such a situation is a unicast packet.

In this example, the classifier unit 210 is capable of identifying administrative packets, for example to provide routing protocol updates. As is known in the art, upon detection of control packet, the classifier unit 210 firstly modifies a predetermined bit position, for example the 0^{th} bit position 209, of the multicast field 202 of data retrieved from the CAM 212 and relating to the processing of the control packet. The multicast field 202 is modified to indicate to the forwarder unit 214 that the control packet should be forwarded to the management processor 102 for central processing. Thereafter, the forwarder unit 214 forwards the control packet to the management processor 102 in response to the modified multicast field. It should be appreciated that the term "control packet" is intended to refer to any packet that is sent to a given router to control the behaviour of the given router, or solicit information about the current state of the given router, for example, management or administrative packets, such as Open Shortest Path First (OSPF), Intermediate System-Intermediate System (ISIS) or Border Gateway Protocol (BGP) routing control protocol packets, or Simple Network Management Protocol (SNMP) packets.

It is this "channel" to the management processor 102 that is used to forward non-control traffic to the central processor 102, for example packets from flows to be monitored. In this respect, if the received packet 201 is a packet to be sampled, for example it has a Flow ID corresponding to a flow to be monitored, and the received packet is received at the time a packet is due to be sampled in accordance with a sampling rate corresponding to the flow to be monitored, the initial, 0^{th}, bit position 209 is modified by the sampling unit 304. Modification of the 0^{th} bit position 209 of the multicast field 202 marks the received packet 201 as needing to be forwarded to the management processor 102 in addition to any of the line cards 104 identified by the other bit positions 206, 208 of the multicast field 202, as recorded in the CAM 212.

Thereafter, the forwarder unit 214 receives the data 200 and forwards the received packet 201 to one or more of the line cards 104 of the router 100 identified in the multicast field 202, as well as the management processor 102 if the 0^{th} bit position 209 so indicates. Packets forwarded by the forwarder unit 214 therefore leave the forwarder unit 214 as a first output stream 402 to the line cards 104 or a second output stream 404 to the management processor 102. In the case of the received packet 201 that has been sampled, the received packet 201 is duplicated by the forwarder unit 214, a sufficient number of times for each line card 104 that has to process the received packet 201, i.e. for the first output stream, and an additional copy forms part of the second output stream 404 destined for the management processor 102. Hence, it can be seen that the predetermined bit position of the multicast field 202 can be used as a management processor, or central processing resource, channel for sampled packets.

To achieve the functionality described above in overview, the classifier unit 210 awaits receipt of a packet, upon receipt of which the key generation unit 300 extracts a number of fields from a header of the received packet 201 and generates a key 310 corresponding to one or more criterion associated with the received packet 201. For example, and depending upon the routing policy being implemented by the router 100, the key generation unit 300 can use destination IP addresses, and/or traffic types (for example, as indicated by port numbers) to generate the key 310. The key 310, summarising the routing needs of the received packet 201, is passed by the key generation unit 300 to the look-up unit 302 and the look-up unit 302 accesses the CAM 212. As a result of the look-up activity, the look-up unit 302 retrieves the data 200 corresponding to the received packet 201 and transmits the data 200 to the sampling unit 304 via the second data bus (not shown).

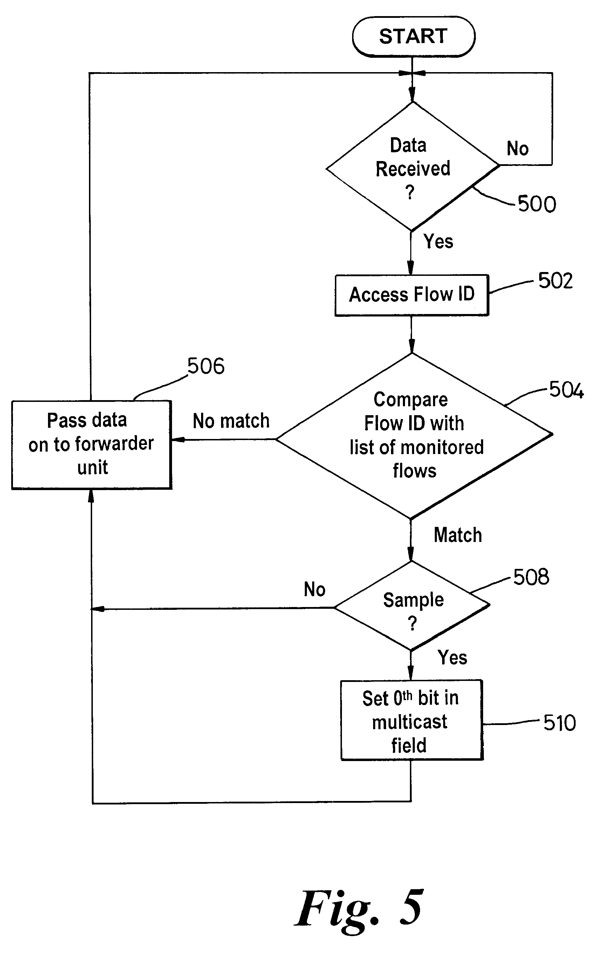

Referring to Figure 5, the sampling unit 304, being located in-line between the classifier unit 210 and the forwarder unit 214, awaits (Step 500) receipt of the data 200 output by the look-up unit 302. The sampler unit 304 then analyses (Step 502) the Flow ID 204 from the data 200 to determine (Step 504) whether or not the Flow ID of the data 200 corresponds to a flow to be monitored. Consequently, the sampler unit 304 access the local store 306 and looks-up the Flow ID of the data 200 in the list of Flow IDs to be monitored to make this determination. Further, as mentioned above, each Flow ID contained in the local store 306 has a respective sampling rate stored therein as well as an associated packet count that is maintained in respect of each Flow ID stored. However, a default sampling rate in the absence of the presence of a specific sampling rate for a given Flow ID can be assigned. Indeed, the sampling rates are set so as to provide the processing resource that includes the management processor 102 with sampled packets at a rate that is within the processing capacity of the management processor 102. In this respect, where the router 100 is Quality of Service (QoS) aware, the line cards 104 track flow rates and flow rate data can be used when setting the sampling rates. Of course, for low volume flows, such as signalling traffic, a high sampling rate can be used to multicast most or all packets in the low volume flow to the management processor 102.

If the Flow ID 204 of the data 200 is not listed in the Flow ID store, the sampler unit 304 passes (Step 506) the data 200 on to the forwarder unit 214 via the first data bus (not shown) for processing in accordance with a normal known processing procedure of the forwarder unit 214. In contrast, if the Flow ID 204 of the data 200 is listed in the local store 306 of the Flow IDs, the sampler 305 updates the packet count associated with the Flow ID 204 and then determines (Step 508), through reference to the associated stored sampling rate and the stored packet count, whether or not the received packet 201 needs to be sampled. If a packet from a stream of traffic corresponding to the Flow ID 204 does not yet need to be sampled, the sampler unit 304 again passes (Step 506) the data 200 on to the forwarder unit 214 via the first data bus (not shown) for processing in accordance with a normal known processing procedure of the forwarder unit 214. However, if the received packet 201 needs to be sampled, the sampler 305 sends a LOGIC HIGH signal, i.e. a binary '1', (Step 506) to the bit modification unit 310. The data 200 again also passes through the sampler 304 on to the forwarding unit 312 via the second data bus (not shown), but the 0^{th} bit of the multicast field 202 of the data 200 is modified (Step 510) as the 0^{th} bit of the multicast field 202 passes through the bit modification unit 310 in response to the sampler 305 sending the LOGIC HIGH signal (Step 506) to the bit modification unit 310,thereby resulting in the 0^{th} bit position 209 assuming a LOGIC HIGH, or binary '1', state. The packet count described above can be any suitable packet counting technique, for example an incremental count that is reset when a predetermined value is reached corresponding to a sampling rate. Alternatively, a decremental approach can be taken, whereby a counter (not shown) is set to the predetermined value corresponding to the sampling rate and then decremented each time a packet is received that is part of a flow to be monitored, a packet being sampled when the counter reaches zero. Thereafter, the counter is reset to the predetermined value.

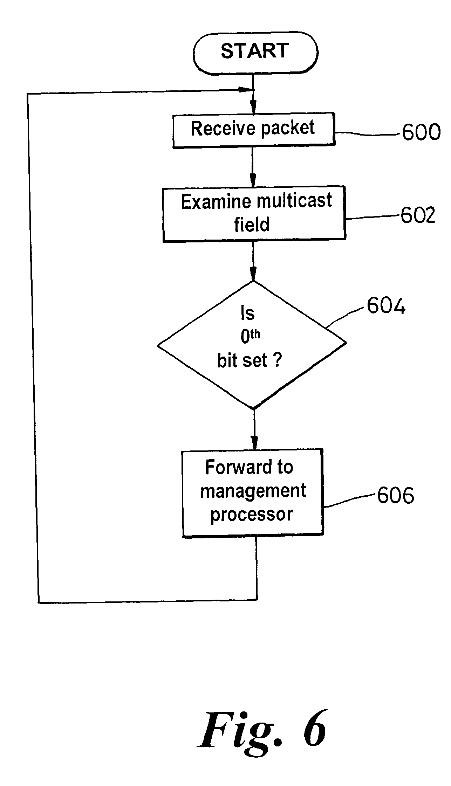

At the forwarder unit 312 (Figure 6), the data 200 is received (Step 600). Thereafter, forwarder unit 312 examines (Step 602), inter alia, the multicast field 202 in accordance with the normal operation of the forwarder unit 312. Distribution of copies of the received packet 201 to line cards 104 will therefore not be described further. However, in relation to the 0^{th} bit position 209 of the multicast field 202, the forwarder unit 312 recognises (Step 604) the received packet 201 as needing forwarding to the management processor 102 and so a copy of the received packet 201 is passed (Step 606) to the management processor 102 via the switching fabric 101.

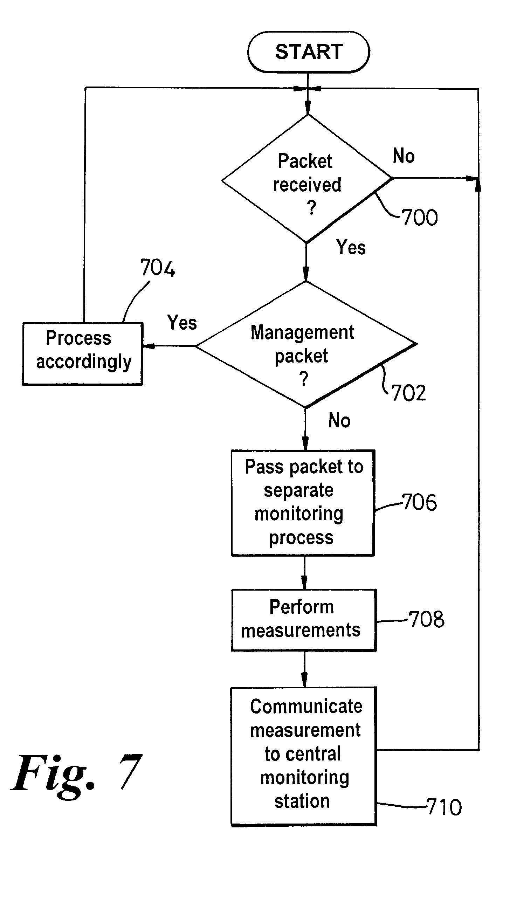

Turning to Figure 7, at the management processor 102, packets are received (Step 700), some of which are recognised (Step 702) by the management processor 102 as management or administrative packets and treated accordingly (Step 704). However, some received packets will be packets to be monitored, for example the received packet 201, and are recognised as such, for example not management or administrative packets, by the management processor 102. Packets recognised as the packets to be monitored are passed (Step 706) to a separate monitoring process for performance of measurements (Step 708) on packets from monitored streams, the separate monitoring process being supported either by the management processor 102 or by an additional processor (not shown). The additional processor alone, or the management processor 102 in combination with the additional processor can also constitute the processing resource. The results of the measurements are then communicated (Step 710) to a central monitoring station. Of course, if it is desirable to avoid providing additional costly processing hardware, the additional processor does not need to be employed and the sampling rates of the classifier units 210 of the line cards 104 can be managed to work within the processing capacity of the management processor 102.

The monitoring process is configured from an external management station (not shown), for example using a Simple Network Management Protocol (SNMP). In this example, the monitoring process has a small number of parameters that can be changed, for example the Flow IDs of the flows to be monitored, the desired accuracy of the monitoring, or the sampling rate, the sampling rate being updated by the management processor 102 communicating an updated sampling rate to the sampler unit 304.

Whilst, in the above example, packets to be monitored are passed to the monitoring process so that the monitoring process can process all sampled packets, simply to generate statistics in relation to the sampled packets, the monitoring process can be configured to forward headers of sampled packets for one or more predetermined flows, or even entire packets to the external monitoring station.

Whilst, in the above example, the classifier chip 110 and the forwarder chip 112 have been provided, it should be appreciated that, as an alternative to providing the classifier chip 110 with the functionality of the sampling unit 304, a separate sampler IC can be provided to support the sampling unit 304, the sampler IC being disposed in-line between the classifier chip 110 and the forwarder chip 112.

Although the above examples have been described in the context of packet communication, it should be appreciated that the term "packet" is intended to be construed as encompassing packets, datagrams, frames, cells, and protocol data units and so these term should be understood to be interchangeable.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A processing apparatus for processing a separately retrievable multicast field (202) associated with a packet received (201) by a packet forwarding apparatus, the processing apparatus (100) comprising:
a packet selector (304) for making a predetermined modification to the separately retrievable multicast field (202) in response to the received packet (201) corresponding to a packet flow to be monitored, thereby marking the received packet (201) for forwarding to a central processing resource (102).

2. An apparatus as claimed in Claim 1, wherein the packet selector (304) is arranged to select received packets at a predetermined sampling rate, and the received packet (201) is a sampled received packet.

3. An apparatus as claimed Claim 1 or Claim 2, wherein the predetermined modification of the separately retrievable multicast field (202) is a modification of a predetermined bit (209) in the separately retrievable multicast field (202) so as to identify the received packet (201) associated with the separately retrievable multicast field (202) for forwarding to the central processing resource, the flow to be monitored comprising the received packet.

4. A packet forwarding apparatus (100) comprising the processing apparatus as claimed in any one of the preceding claims.

5. An apparatus as claimed in Claim 4, further comprising the central processing resource (102) and a switching fabric (101) coupled to each of the central processing resource (102) and a packet forwarder (112); wherein
the packet forwarder (112) is arranged to forward a copy of the received packet (201) to the central processing resource (102) in response to detection of the predetermined modification to the separately retrievable multicast field (202).

6. An apparatus as claimed in Claim 5, further comprising a packet classifier (110) for identifying another packet forwarding apparatus to receive the received packet (201), the packet classifier (110) including the processing apparatus, and the packet forwarder (112) being arranged, when in use, to send the received packet (201) to the another packet forwarding apparatus.

7. An apparatus as claimed in Claim 5 or Claim 6, wherein the central processing resource (102) is arranged to perform statistical analysis in relation to non-control packets received from the packet forwarder (112).

8. A method of analysing packets for a packet forwarding apparatus (100), the method comprising the steps of:
receiving a packet (201) to be forwarded;
making (506) a predetermined modification to a separately retrievable multicast field (202) associated with the received packet (201) in response to the received packet (201) corresponding to a packet flow to be monitored, thereby marking the received packet (201) for forwarding to a central processing resource (102).

9. A method as claimed in Claim 8, further comprising the steps of:
detecting (604) the predetermined modification to the separately retrievable multicast field (202); and
forwarding (606) a copy of the received packet (201) in response to the detection of the predetermined modification for receipt by the central processing resource (102).

10. A method as claimed in Claim 8 or Claim 9, further comprising the step of:
receiving a plurality of packets comprising the received packet (201); and
selectively modifying (506) respective separately retrievable multicast fields associated with the plurality of packets in accordance with a predetermined rate so as to sample packets.

11. A use of a separately retrievable multicast field (202) associated with a non-control packet (201) received by packet forwarding apparatus (100) to forward the received packet (201) to a central processing resource (102) of the packet forwarding apparatus (100) for monitoring a traffic flow associated with the received packet.
